# EUROPEAN PATENT SPECIFICATION

(11) **EP 2 061 288 B1**
(45) Date of publication and mention of the grant of the patent: **07.12.2011**
(21) Application number: 07745279.5
(22) Date of filing: 14.06.2007
(51) Int. Cl.: H05B 37/02, G02F 1/133, G09G 3/20, G09G 3/34, G09G 3/36

(54) **ILLUMINATING DEVICE AND LIQUID CRYSTAL DISPLAY DEVICE**
BELEUCHTUNGVORRICHTUNG UND FLÜSSIGKRISTALLANZEIGEANORDNUNG
DISPOSITIF D'ECLAIRAGE ET DISPOSITIF D'AFFICHAGE A CRISTAUX LIQUIDES

(30) Priority: 06.09.2006 JP 2006242047
(43) Date of publication of application: 20.05.2009
(73) Proprietor: Sharp Kabushiki Kaisha, Osaka-shi, Osaka 545-8522 (JP)
(72) Inventor: AKE, Yasunori, Nara 634-0046 (JP); UEHARA, Kazuhiro, Nara 632-0081 (JP); YAMANE, Yasukuni, Nara 636-0247 (JP)
(74) Representative: Müller - Hoffmann & Partner
(86) International application number: PCT/JP2007/062022
(87) International publication number: WO 2008/029548

(56) References cited:
- EP-A- 1 675 097
- WO-A-2004/023443
- WO-A-2004/097784
- JP-A- 2004 038 210
- JP-A- 2005 310 997
- JP-A- 2005 331 644
- US-A1- 2006 049 781

## Description

### TECHNICAL FIELD

The present invention relates to an illuminating device used for a display device such as a liquid crystal display device.

### BACKGROUND ART

A conventional backlight device for a non-illuminating type display device such as a liquid crystal display device emits light with fixed brightness. The brightness of the backlight is set so that a display screen can attain maximum brightness. However, when the brightness of the backlight is fixed regardless of the displayed images, unnecessary power is consumed because the power does not contribute to display black or dark images. Moreover, some light of the backlight leaks when displaying black, and the leakage of light causes decrease of the contrast.

As is disclosed in Patent Documents 1 to 3, a display device (backlight) provided with a plurality of illuminating areas is proposed. The display device controls the brightness of each illuminating area depending on inputted image signals.
[Patent Document 1] Japanese Unexamined Patent Application Publication No. 2005-70690 (published on March 17, 2005)
[Patent Document 2] Japanese Unexamined Patent Application Publication No. 2005-258403 (published on September 22,2005)
[Patent Document 3] Japanese Unexamined Patent Application Publication No. 2002-99250 (published on April 5, 2002)

US 2006/0049781 A1 describes the use of a plurality of light sensors to regulate a direct-firing backlight for a display, wherein each of a plurality of light sensors is positioned to sense light produced by a corresponding one of the light emitting regions.

WO 2004/023443 A2 describes an organic electronic device comprising radiation-sensing elements wherein the calibration is performed in two sets of measurements according to a complementary checkerboard pattern in order to eliminate cross talk between immediately adjacent pixels.

### DISCLOSURE OF INVENTION

However, light emitting elements are uneven in characteristic. Moreover, when a plurality of illuminating areas is controlled individually, the total quantity of light emission of each area (time-integrated value) is different. Because of this difference, the light emitting quantity in each illuminating area becomes different (even though the same control for light emitting is performed). For instance, when a different color of light emitting element is provided in each illuminating area, the same color of the light emitting bodies in each illuminating areas would emit different quantity of light. In order to solve above problem, the light emitting quantity may be corrected in each illuminating area. However, when the light emitting quantify is detected or corrected in the condition that the each illuminating area is lit, the correction accuracy cannot be improved because of the interference between illuminating areas whereas users will not notice the correction visually.

The present invention is accomplished in consideration of above problems. An object of the invention is to correct light emitting quantity in each illuminating area of a backlight device provided with a plurality of illuminating areas accurately in a short time (in such a short time that users will not notice the correction).

The problem is solved by an illuminating device according to claim 1

An illuminating device according to the present invention comprises: light source modules each includes a light emitting element and a driver circuit for driving the light emitting element, the driver circuit of each light source module is controllable individually, wherein: the light source modules are grouped into groups including a plurality of the light source modules arranged with intervals between each other; the step of turning on the each light emitting element of the light source modules in the same group simultaneously under a predetermined condition is carried out in turn for all the groups; and the driver circuit for the light source module is controlled based on a light emitting quantity thus obtained of the light emitting element of each light source module.

In accordance with the above configuration, because a plurality of light source modules are lit simultaneously and the light emitting quantity is detected thereafter, time for the detection step can be drastically reduced compared to a step of scanning light source modules (detecting light emitting quantity) one by one. Moreover, because each light source module in the same group (lit simultaneously) is arranged with intervals between each other, a crosstalk between those light source modules is reduced. As a result, the detection accuracy of light emitting quantity can be secured. The driver circuit of the light source module is controlled based on the light emitting quantity of each light source module detected in the step, and thereby the correction of light emitting quantity of each light source module can be performed accurately in a short time.

In the present illuminating device, it is preferable that each light source module includes a light sensor for detecting the light emitting quantity of the light emitting element included in the light source module. The detecting accuracy of light emitting quantity can be improved by installing a light sensor on each light source module.

In the present illuminating device, it is preferable that the intervals between each light source module are so large that the light from each light source module in the same group does not interfere the others. By doing this, a crosstalk between light source modules emitting light simultaneously can be eliminated and thereby the detecting accuracy of light emitting quantity can be improved furthermore.

In the present illuminating device, the step is performed when the light emitting element is at its service temperature (for instance, almost at the same time as a illuminating device in use is turned off).

In the present illuminating device, it is preferable that each of the light source module includes a temperature sensor and the control is performed based on the detected temperature by the sensor. The light emitting element changes its characteristic depending on its temperature. The light emitting quantity of each light source module is measured at the same time as the temperature of each light source is measured, and thereby a change quantity of light emitting quantity of light emitting element by such as secular variation in each light source module can be calculated. By controlling the driver circuit of each light source module based on the calculated change quantity of light emitting quantity, a light emitting quantity of each light source module can be corrected more accurately.

Especially, when the step is performed under the condition that the light emitting element is at service temperature, the temperatures of light emitting bodies between light source modules are different depending on the latest use situation. Even in this case, a change quantity of light emitting quantity (by such as secular variation) is calculated based on the light emitting quantity and temperature of each light source module, and thereafter the driver circuit of each light source module is controlled based on the calculation, and thereby the light emitting quantity of each light source module can be corrected more accurately.

In this case, for instance, standard light emitting quantity by certain temperature is determined in advance, and thereafter a change quantity of light emitting quantity is calculated in each of the light source module based on the measured temperature, and then the driver circuit is controlled (the light emitting quantity is corrected) based on the calculation result. In the case of a standard light emitting quantity at temperature T1 is regarded as Lx and a standard light emitting quantity at temperature T2 is regarded as Ly, if the temperature of first light source module is T1 with light emitting quantity L1, and also the temperature of second light source module is T2 with light emitting quantity L2, the driver circuit in the first light source module is controlled (light emitting quantity is corrected) based on a change quantity of light emitting quantity (L1-Lx), and also the driver circuit in the second light source module is controlled (light emitting quantity is corrected) based on a change quantity of light emitting quantity (L2-Ly).

In the present illuminating device, each light source module includes light emitting elements of plural kinds, and the same-kind light emitting elements can be lit simultaneously in each light source module in the same group.

In the present illuminating device, each light source module may include LEDs of three colors, and in each light source module, each color LED is lit in turn.

Moreover, in each of the light source module, the two colors of LEDs may be lit simultaneously, and the rest color of the LED is lit thereafter. In this case, each light source module includes the red LED, green LED and blue LED. The red and blue LEDs, those two have separate peak wavelength one another, are lit simultaneously, and the green LED is lit thereafter. By doing this, the detection time can be reduced furthermore.

Moreover, the present illuminating device may be arranged such that the driver circuit of each light source module is controlled based on the light emitting quantity of the light emitting element of the light source module, so as to adjust a driving current value or driving frequency of the light emitting element.

A backlight device according to the present invention comprises the illuminating device described above.

Moreover, a liquid crystal display device according to the present invention comprises the backlight described above.

A liquid crystal display device according to the present invention may perform the step in turning off the power supply of the liquid crystal display device. By doing this, the above step will not be noticed visually by users.

Moreover, a liquid crystal display device according to the present invention may also perform the step in turning on the power supply of the liquid crystal display device. In this case, the liquid crystal display device may comprise a temperature sensor for detecting the temperature in case the temperature in the liquid crystal display device is able to be regarded as uniform in turning on the power supply. By doing this, the driver circuit of each light source module can be controlled based also on the above temperature.

Moreover, in the liquid crystal display device according to the present invention, the step (control for driver circuit of each light source module) may be performed after the power supply of the liquid crystal display device is turned on.

Moreover, in the present liquid crystal display devise, it is preferable that the predetermined condition (for instance: driving current value) is set so that users will not notice the step.

Moreover, in the present liquid crystal display devise, it is preferable that the display section is driven in the step so that users will not notice the light from the backlight device visually. For instance, the display section may be provided with a black screen. By doing this, the step can be performed without being noticed by users.

Moreover, the present liquid crystal display devise may be arranged such that the driver circuit of the light source module is controlled based on the light emitting quantity of light emitting element of each light source module, so as to adjust the driving current value or driving frequency of light emitting element in normal display.

Moreover, a method according to the present invention for controlling an illuminating device provided with light source modules each of which has a light emitting element and a driver circuit for driving the light emitting element, comprises: grouping the light source modules into groups including a plurality of the light source modules with intervals therebetween; lighting the each light emitting element of the light source modules in the same group simultaneously under a predetermined condition for all the groups in turn; detecting a light emitting quantity of the light emitting element of each light source module; and controlling the driver circuit for each light source module based on the light emitting quantity of the light emitting element of the light source module. In this case, it is preferable that the intervals between each light source module are so large that the light from each light source module in the same group does not interfere the others.

Moreover, a method according to the present invention for controlling a liquid crystal display device, comprises: controlling a backlight device including light source modules each of which has a light emitting element and a driver circuit for driving the light emitting element, by the control method, wherein: the step of turning is performed in turning on or off the power supply of the liquid crystal display device.

As described above, in accordance with the present illuminating device, because a plurality of light source modules are lit simultaneously, and thereafter the light emitting quantity is detected, time for the detection step can be drastically reduced compared to a step of scanning light source modules (detecting light emitting quantity) one by one. Moreover, because each light source module in the same group (lit simultaneously) is arranged with intervals between each other, a crosstalk between those light source modules is reduced. As a result, the detection accuracy of light emitting quantity can be secured. The driver circuit of the light source module is controlled based on the light emitting quantity of each light source module detected in the step, and thereby the correction of light emitting quantity of each light source module can be performed accurately in a short time.

### BRIEF DESCRIPTION OF DRAWINGS

FIG. 1 is a schematic view showing an example of detection order of each group (a group containing a plurality of light source modules).
FIG. 2 is a schematic view showing an example of detection order of each group (a group containing a plurality of light source modules).
FIG. 3 is a graph showing a sensitivity behavior of a color sensor of light source module.
FIG. 4 is a block diagram showing a configuration of the present liquid crystal display device.
FIG. 5 is a schematic view showing a configuration of the backlight device of the liquid crystal display device in FIG. 4.
FIG. 6 is a block diagram showing control relations of backlight device and the configuration of light source module.
FIG. 7 is a schematic plan view showing an example of arrangement of each color LED and a color sensor.
FIG. 8 is a block diagram showing a configuration other than the backlight device.

Explanation of Referential Numerals
- 2:: Controller
- 3:: Liquid crystal panel driver circuit
- 4:: Power supply control section
- 9:: Liquid crystal panel
- 10:: Liquid crystal display device
- 18:: Backlight device
- 22:: LED driver circuit
- 24:: LED driver control section
- 26:: Memory
- 44:: Temperature sensor
- LM:: Light source module

### BEST MODE FOR CARRYING OUT THE INVENTION

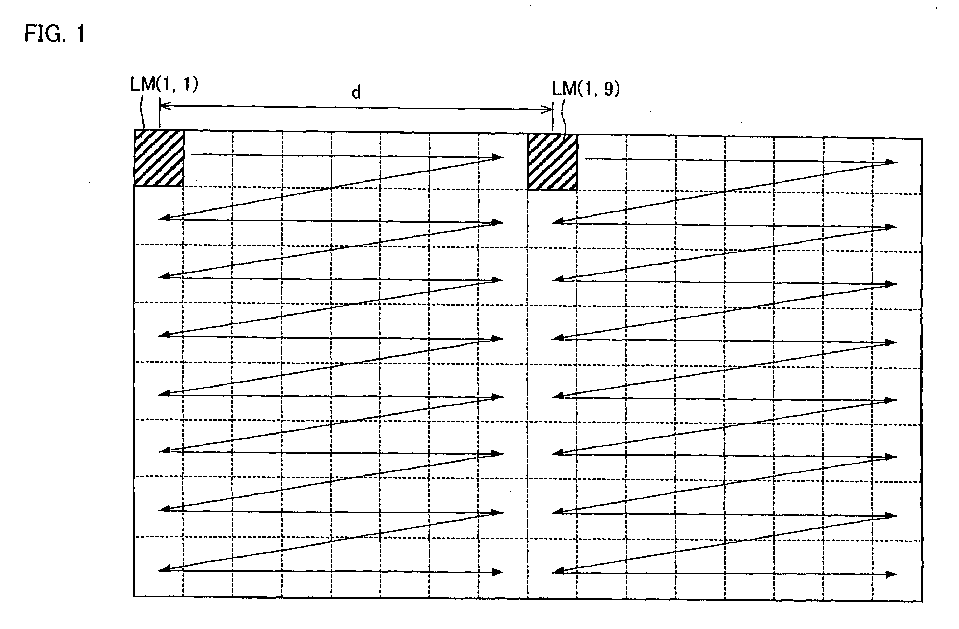

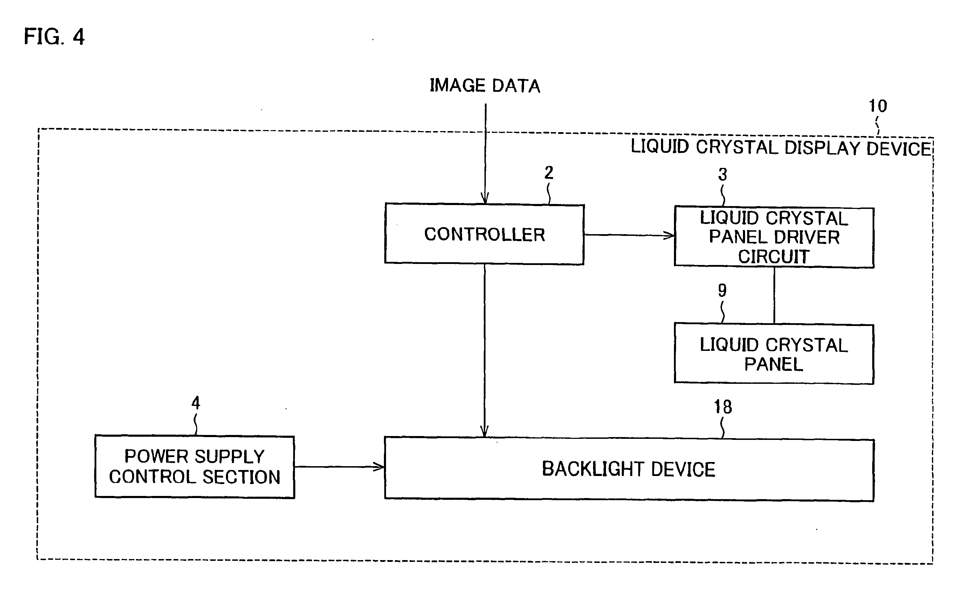

Embodiments of the present invention are described below with reference to FIGs. 1 to 8. As shown in FIG. 4, an embodiment of a liquid crystal display device 10 is provided with a liquid crystal panel 9, a liquid crystal panel driver circuit 3, a controller 2, a present backlight device 18, a light element such as diffusion panel (not illustrated), and a power supply control section 4. The controller 2 controls the liquid crystal panel driver circuit 3 and the backlight device 18 based on inputted image data. Under the control by the controller 2, liquid crystal panel driver circuit 3 drives the liquid crystal panel 9. The backlight device 18 emits light following the control by the controller 2. The light emitted from the backlight device 18 is supplied to the liquid crystal panel 9 through such as a diffusion panel (not illustrated). Moreover, the power supply control section 4 controls the power supply system of the liquid crystal display device 10 according to whether the power supply is turned on or off by a user.

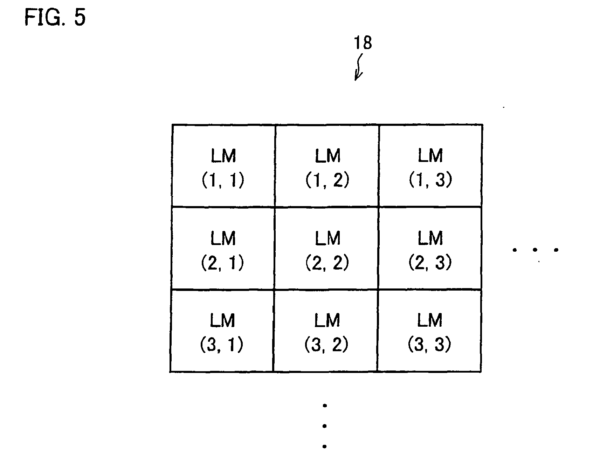

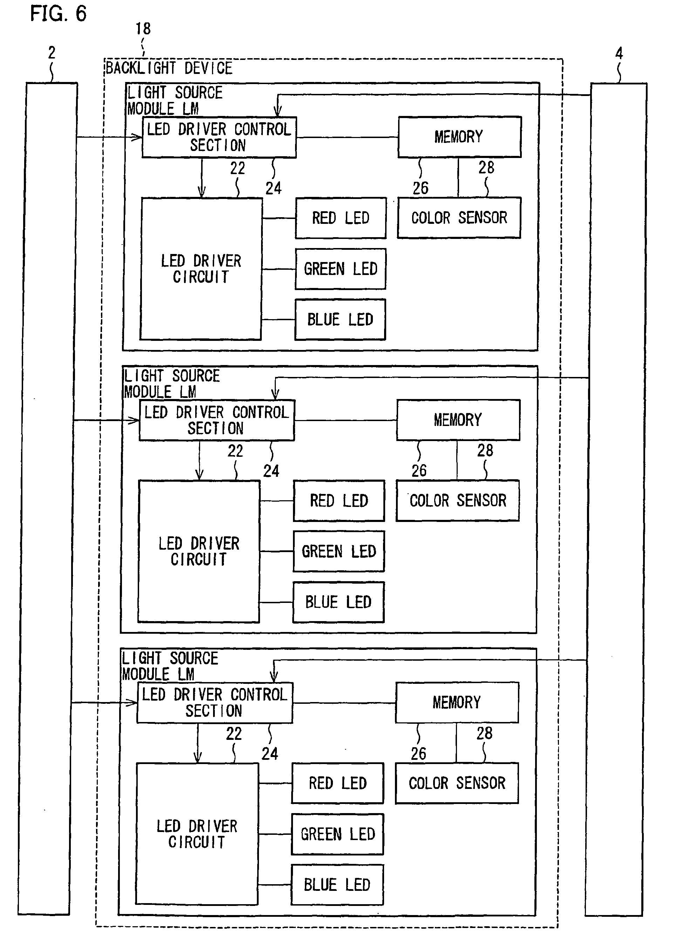

The backlight device 18 is provided with a plurality of light source modules LM (I, j) (note: i=1, 2,... j= 1, 2, ...) as shown in FIG. 5 for instance. A part of the backlight device 18 (the part containing three light source modules) is shown in FIG. 6. As shown in FIG. 6, each light source module LM is provided with one or more red LEDs, one or more green LEDs, one or more blue LEDs, a LED driver circuit 22, a LED driver control section 24, a memory 26 provided with analog/digital conversion circuit, and a color sensor 28. The memory 26 may be contained in the LED driver control section 24 or the controller 2.

The LED driver control section 24 controls the LED driver circuit 22 based on commands from the controller 2. The LED driver circuit 22 drives (lights) the red, green, and blue LEDs individually based on the control of the LED driver control section 24.

The color sensor 28 detects each light emitting quantity of the red, green, and blue LEDs, and thereafter the detected result is outputted to the analog/digital conversion circuit of the memory 26. The detected result converted in digital data is then stored in the memory 26. Moreover, the LED driver control section 24 controls the LED driver circuit 22 based on the result in the memory 26, and thereby the light emitting quantity of each color LED is corrected. In accordance with the present backlight device 18, the control for the LED driver circuit 22 based on the detected result of light emitting quantity of each color LED is performed for all the light source modules LM.

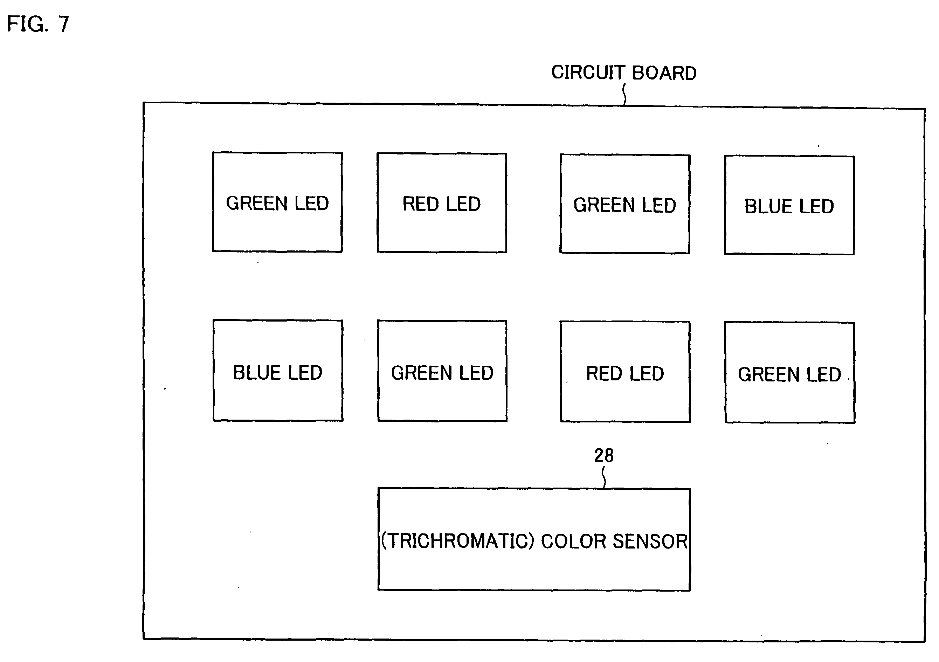

FIG. 7 shows a case that each light source module LM is provided with two red LEDs, four green LEDs, two blue LEDs, and a color sensor. It is preferable that each LED and a color sensor of each light source module are provided in the same circuit board as shown in FIG. 7. The present invention is not limited to the configuration of the light source module LM shown in FIG. 7. For instance, each light source module can be provided with only white LEDs.

The color sensor can be arranged anywhere on the circuit board. However, it is preferable that the sensor is arranged so as not to be influenced so much by light (outside light) other than the light of each LED of light source module. This configuration reduces detection error. Moreover, the three colors of light (red, green, blue) of each LED are mixed by a mixing element, and thereafter the mixed light illuminates the liquid crystal panel 9 through a light element such as diffusion panel (not illustrated).

A detection step for the light emitting quantity of each light source module is described in more details below.

The present detection step can be performed when the LED is at service temperature. For instance, the detection step is performed in turning off the power supply of the liquid crystal display device 10 by a user. By doing this, the present detection step will not be noticed visually by users.

Moreover, in the present detection step, each color LED (plural number) emits light under the predetermined condition (driving current value), and thereafter the light emitting quantity is detected. To be more precise, the LED driver control section 24 controls the LED driver circuit 22 by the command from the power supply control section 4 recognizing the power-off, and thereafter each color LED of light source module is lit. It is preferable that the above driving current value for each color LED is set to emit weak light so that the light will not be noticed by users. Moreover, in the detection step, the liquid crystal panel driver circuit 3 that receives a command from the controller 2 may drive the liquid crystal panel 9 so that the light from the backlight device 18 will not be noticed by users. For instance, the liquid crystal panel 9 is provided with a black screen, and thereby the detection step is not noticed by users, and also an influence of outside light can be eliminated.

In accordance with the present liquid crystal display device 10, the detection step is performed for a plurality of light source modules simultaneously. For instance, as shown in FIG. 1, a plurality of light source modules (shaded light source modules in the figure) those are separated by a distance d (distance between light source modules enough not to be influenced by the other light emitting) are grouped. All light source modules LM (I, j) (note: i=1, 2,... j= 1, 2, ...) are distributed in any one of the groups. That is, light source module LM (1, 1) and light source module LM (1, 9) are grouped, LM (2, 1) and LM (2, 9) are grouped, LM (3, 1) and LM (3, 9) are grouped, and continued similarly (that is, LM (i, 1) and (i, 9) are grouped). Moreover, light source module LM (1, 8) and light source module LM (1, 16) are grouped, LM (2, 8) and LM (2, 16) are grouped, LM (3, 8) and LM (3, 16) are grouped, and continued similarly (that is, LM (i, 8) and (i, 16) are grouped). As just described, two light source modules LM (i, j) and (i, j+8) are grouped.

Moreover, each light source module in the same group performs the detection step simultaneously. The two red LEDs, four green LEDs, and two blue LEDs emit light with predetermined driving current value in turn, and thereafter the light quantity (of the three colors) is detected by the color sensor 28. The detected result is outputted to the analog/digital conversion circuit of the memory 26. The above driving current value is within a range that the light emitting quantity of each LED is not noticed by the user. The step is performed in all the groups following the zigzag arrows in FIG. 1 (The group of LM (1, 1) and LM (1, 9) → the group of LM (1, 8) and LM (1, 16) → the group of LM (2, 1) and LM (2, 9) → the group of LM (2, 8) and LM (2, 16), ...), and thereby the light emitting quantity of each color of all light source module LM (i, j) (note: i=1, 2,... j= 1, 2, ...) can be stored in the memory 26 as digital data. By doing this, the detection step time can be reduced to half compared to a case of scanning (detecting) the light source modules one by one. Moreover, each light source module in the same group (lit simultaneously) is arranged with intervals between each other by the distance d (distance between light source modules enough not to be influenced by the other light emitting), and thereby the detection accuracy of the light emitting quantity of each color LED can be secured.

After the above detection step, when the liquid crystal display device operates normally, the LED driver control section 24 controls the LED driver circuit 22 based on the light emitting quantity read out from the memory 26 in each light source module LM. To be more precise, the LED driver control section 24 compares the light emitting quantity of each LED with the standard values of the colors. When the light emitting quantity is smaller than the standard value, the LED driver control section 24 controls the LED driver circuit 22 to increase the light emitting quantity of the color of LED. When the light emitting quantity is larger than the standard value, the LED driver control section 24 controls the LED driver circuit 22 to reduce the light emitting quantity of the color of LED. This control is performed for all the light source modules, and thereby a difference of light emitting quantity between the same color LEDs is reduced drastically. Examples of a method for correcting the light emitting quantity of LEDs encompass adjusting the driving current value of the LED driver circuit 22, or adjusting the light emitting time (driving frequency) of LED per unit time without changing the current value.

The standard value of light emitting quantity of each color can be predetermined. However, this may causes that the correction of light emitting quantity can not be performed accurately because the temperatures of light emitting element of light source modules are different depending on the latest use (illuminating) situation when the detection step is performed at the same time as the power supply of the liquid crystal display device is turned off (in the light emitting bodies are at their service temperature).

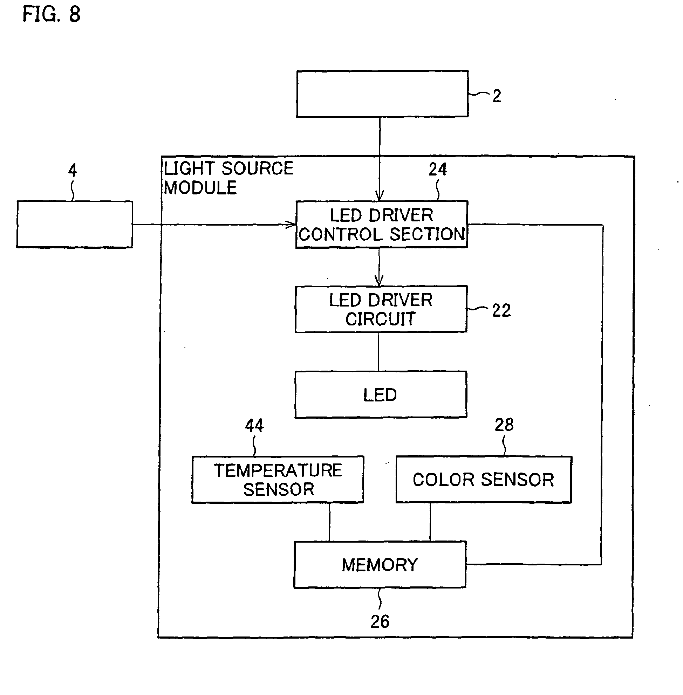

Especially, when the detection step is performed with the light emitting bodies at their service temperature, it is preferable that a temperature sensor 44 is provided in each light source module as shown in FIG. 8, and the temperature is measured at the same time as detecting the light emitting quantity of each color LED of each light source module. In this case, the standard value of light emitting quantity of each color LED is set for each temperature.

More specifically, the detected light emitting quantity of each color LED by the detecting step and the measured temperature of temperature sensor 44 are stored in the memory 26 of each light source module. The LED driver control section 24 controlled by the power supply control section 4 compares the light emitting quantity of each color LED with the standard value corresponding to the measured temperature of the color. The LED driver control section 24 controls the LED driver circuit 22 based on the comparison result (change quantity of light emitting quantity by such as secular variation).

For instance, on the condition that a standard light emitting quantity of red LED is regarded as Lx at a temperature T1 and a standard light emitting quantity of red LED is regarded as Ly at a temperature T2, if the detected temperature of light source module LM (1,1) is T1 with the light emitting quantity of red LED L1, the LED driver control section 24 controls the LED driver circuit 22 (corrects the light emitting quantity) based on the change quantity of light emitting quantity (L1-Lx) in the red LED of light source module LM (1, 1). Moreover, if the detected temperature of light source module LM (3, 3) is T2 with the light emitting quantity of red LED L2, the LED driver control section 24 controls the LED driver circuit 22 (corrects the light emitting quantity) based on the change quantity of light emitting quantity (L2-Ly) in the red LED of light source module LM (3, 3). By doing this, even though the detection step is performed with the light emitting bodies at their service temperature (each light source module has temperature distribution), the light emitting quantity of each light source module can be corrected accurately.

Moreover, in FIG. 1, a scanning (detection of light emitting quantity) order for each group (a group containing a plurality of light source modules) is indicated by zigzag arrows. This order is indicated just for an example. Any pattern of scan order for each group is permissible because the light source modules of each group are arranged with intervals enough not to influence each other by their light.

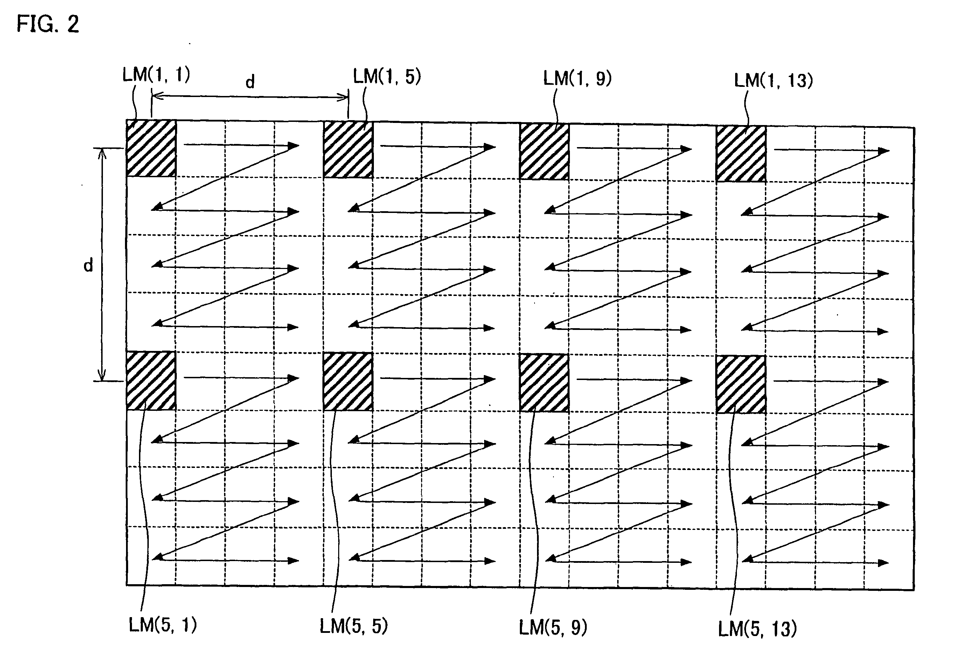

Moreover, in FIG. 1, two light source modules are grouped and each light source module in the same group is detected simultaneously. However, the present invention is not limited to this configuration. For instance, as shown in FIG. 2, eight light source modules can be grouped and the eight light source modules in the same group may be detected simultaneously. Following the zigzag arrows in FIG. 2, the detection step is performed in the order like: a group of LM (1, 1), LM (1, 5), LM (1,9), LM (1, 13), LM (5, 1), LM (5, 5), LM (5, 9), and LM (5, 13) → a group of LM (1, 4), LM (1, 8), LM (1, 12), LM (1, 16), LM (5, 4), LM (5, 8), LM (5, 12), and LM (5, 16) → a group of LM (2, 1), LM (2, 5), LM (2, 9), LM (2, 13), LM (6, 1), LM (6, 5), LM (6, 9), and LM (6, 13) and so forth. By doing this, the detection step time can be reduced to an eighth compared to scanning (detecting) the light source modules one by one. In this case also, each light source module in the same group (lit simultaneously) are arranged with intervals between each other by the distance d (distance between light source modules enough not to be influenced by the other light emitting), and thereby the detection accuracy of the light emitting quantity of each color LED can be secured.

Moreover, the detection step may be performed in user's turning on the power supply of the liquid crystal display device 10. More specifically, the control section for LED 24 controls the LED driver circuit 22 by the command from the power supply control section 4 recognizing power-on, and thereafter each color LED of light source module is lit. In this case, it is preferable that the above driving current value for each color LED is set to emit weak light so that the light will not be noticed by users. Moreover, in the detection step, the liquid crystal panel driver circuit 3 controlled by the controller 2 may drive the liquid crystal panel 9 so that the light from the backlight device 18 will not be noticed by users. For instance, the liquid crystal panel 9 is provided with a black screen, and thereby the detection step is not noticed by users, and also an influence of outside light can be eliminated.

When the power supply of the liquid crystal display device is turned on, it is often occurred that the entire liquid crystal display device including each light source module is at an even temperature (for instance: room temperature) because certain degree of time has passed since the power supply is turned off.

In this case, for instance, a temperature sensor for the liquid crystal display device is provided, and if the detected temperature by the sensor is regarded as the temperature of each light source module, there is no need that a temperature sensor is provided in each light source module. However, it may happen that the temperature of each light source device is not even because the interval between the power-off and the power-on is short. In this case, for instance, it may be arranged such that a timer function is provided in the controller 2, and only when the interval between the power-off and the power-on is longer than or equal to a predetermined time, the detection step is performed. The detection step should be finished before the temperature of each light source module become uneven after the power-on. In accordance with the present embodiment, the detection step can be finished in a short time (the temperature of each light source module is still even) after the power-on (note: the temperatures of each light source module become different after a period of time has passed after the power-on). Thus, the present embodiment allows the detection step to be finished before the temperature of each light source module become uneven after the power-on.

Alternatively, a temperature sensor may be provided in each spot of large and small temperature increase in the liquid crystal display device. In this arrangement, only when almost even temperatures are detected by the two temperature sensors, the detection step is performed, and thereafter the detected temperature may be regarded as the temperature of each light source module. With this arrangement, a temperature sensor is not needed to be provided in each light source module.

Moreover, in the detection step performed under powered-on condition, when the liquid crystal display device performs normal operation after the detection step, the LED driver control section 24 controls the LED driver circuit 22 based on the light emitting quantity read out from the memory 26 in each light source module LM.

In the above each configuration, in accordance with the light source modules in the same group, the two red LEDs, four green LEDs, and two blue LEDs are lit in turn at the same timing with a predetermined driving current value. In this case, a low-cost monochromatic sensor can be provided instead of the color sensor 28 shown in FIG. 7 and FIG. 8.

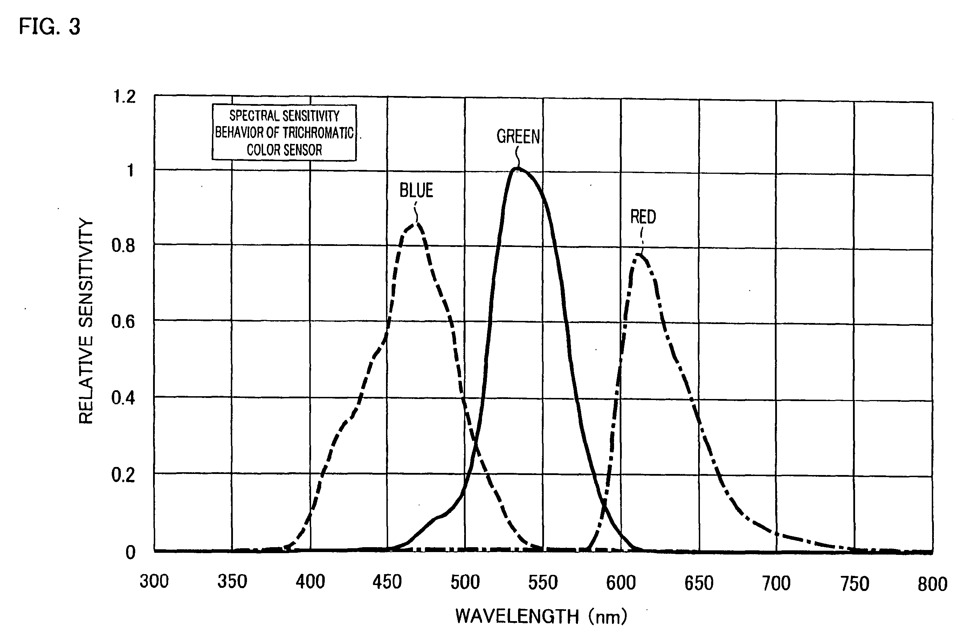

The present invention is not limited to the above configuration (each color LED of each light source module is lit in turn). For instance, in the light source modules in the same group, the two red LEDs and the four blue LEDs may be lit simultaneously, and thereafter the two green LEDs may be lit. That is, in each light source module, the two red LEDs and the four blue LEDs are lit simultaneously with their predetermined driving current value, and thereafter the light emitting quantity of each color LED (red and blue) is simultaneously detected by the trichromatic color sensor 28. After that, the two green LEDs are lit with their predetermined current value, and thereafter the light emitting quantity of the green LED is detected by the trichromatic color sensor 28. In accordance with the sensitivity behavior of color sensor shown in FIG. 3, even though the light emitting quantity of each LED (red and blue) is detected simultaneously, there is no (or small) influence of crosstalk because the peaks of red and blue wavelengths are separated one another. Moreover, the peak of green wavelength is near to the peaks of red and blue wavelengths. Therefore, another detection step for the green LED (other than for the red and blue LEDs) is performed to avoid the crosstalk. By doing this, the detection step time for one light source module can be reduced to two-thirds compared to the case that red, green, and blue LEDs of each light source module are lit in turn.

In accordance with the backlight device 18, the light emitting quantity of each color LED of all the light source modules can be detected and corrected in a short time without being noticed by the user. The evenness of color and brightness of all the light source modules can be improved thereby.

The invention being thus described, it will be obvious that the same way may be varied in many ways.

### INDUSTRIAL APPLICABILITY

The present illuminating device is suitable for use in a backlight provided in such as a liquid crystal display and a liquid crystal display television.

## Claims

1. A liquid crystal display device (10) comprising:
a liquid crystal panel (9):
an illuminating device (18), and
a control section (2),
the illuminating device (18) comprising:
light source modules (LM) that illuminate the liquid crystal panel, wherein:
each of the light source modules includes a first, a second and a third light emitting element, the first light emitting element emitting light of a first color, the light having a first peak wavelength, the second light emitting element emitting light of a second color, the light having a second peak wavelength, the third light emitting element emitting light of a third color, the light having a third peak wavelength, a driver circuit (22) adapted to drive the first, the second and the third light emitting element, a trichromatic color sensor (28) adapted to detect a light emitting quantity of the first, the second and the third light emitting element, a memory (26) adapted to store the light emitting quantity of the first, the second and the third light emitting element, and a LED driver control section (24) adapted to control the driver circuit (22) and the memory (26),
the illuminating device (18) being configured:
to group the light source modules into groups so that each light source module belongs to one of the groups, any two light source modules in the same group being separated by so large a distance that the light emitting of one of the two light source modules does not interfere the trichromatic color sensor (28) of the other one of the two light source modules;
to perform a detection step on a group, during the detection step the control section (2) being configured to control LED driver control sections (24) of the group so that all first light emitting elements of the group and all second light emitting elements of the group are simultaneously turned on and in each of the light source modules (LM) of the group the light emitting quantity of the first and the second light emitting element are detected by the trichromatic color sensor (28) and stored in the memory (26), after that all third light emitting elements of the group are simultaneously turned on and in each of the light source modules (LM) of the group the light emitting quantity of the third light emitting element is detected by the trichromatic color sensor (28) and stored in the memory (26); and
to repeat the detection step on each group, wherein in each of the light source modules the LED driver control section (24) is configured to control the driver circuit (22) based on the light emitting quantity of the first, the second, and the third light emitting element stored in the memory (26), and
the second peak wavelength is bigger than the third peak wavelength and the third peak wavelength is bigger than the first peak wavelength.

2. The liquid crystal display device (10) according to claim 1, further comprising a liquid crystal panel driver (3) for driving the liquid crystal panel (9), the liquid crystal panel driver (3) being controlled by the control section (2) wherein
during the detection step the control section (2) is configured to control the liquid crystal panel driver so that the liquid crystal panel (9) produces a black display.

3. The liquid crystal display device (10) according to claim 1, wherein the illuminating device (28) is configured to perform the detection step during a switching period from an ON state of the power supply of the liquid crystal display device (10) to an OFF state thereof.

4. The liquid crystal display device (10) according to claim 1. wherein the first, the second, and the third light emitting element are red LED, blue LED. and green LED respectively.

5. The liquid crystal display device (10) according to claim 1, wherein:
each of the light source modules comprises a temperature sensor (44) for detecting temperature in the detection step and the memory (26) is configured to store the temperature; and
in each of the light light source modules the LED driver control section (24) is configured to control the driver circuit (22) further based on the temperature stored in the memory (26).

6. The liquid crystal display device according to claim 1, wherein in each of the light source modules the driver circuit (22) is controlled by the LED driver control section (24) to adjust the driving current value or driving frequency of the light emitting element.

## Patentansprüche

1. Flüssigkristallanzeigevorrichtung (10), mit:
einer Flüssigkristalltafel (9);
einer Beleuchtungsvorrichtung (18); und
einem Steuerabschnitt (2),
wobei die Beleuchtungsvorrichtung (18) enthält:
Lichtquellenmodule (LM), die die Flüssigkristalltafel beleuchten, wobei:
jedes der Lichtquellenmodule ein erstes, ein zweites und ein drittes lichtemittierendes Element enthält, wobei das erste lichtemittierende Element Licht einer ersten Farbe emittiert, wobei das Licht eine erste Peak-Wellenlänge besitzt, das zweite lichtemittierende Element Licht einer zweiten Farbe emittiert, wobei das Licht eine zweite Peak-Wellenlänge besitzt, das dritte lichtemittierende Element ein dritte Farbe emittiert, wobei das Licht eine dritte Peak-Wellenlänge besitzt, eine Treiberschaltung (22), die dazu ausgelegt ist, das erste, das zweite und das dritte lichtemittierende Element anzusteuern, einen trichromatischen Farbsensor (28), der dazu ausgelegt ist, eine Lichtemissionsmenge des ersten, des zweiten und des dritten lichtemittierenden Elements zu detektieren, einen Speicher (26), der dazu ausgelegt ist, die Lichtemissionsmenge des ersten, des zweiten und des dritten lichtemittierenden Elements zu speichern, und einen LED-Treiber-Steuerabschnitt (24), der dazu ausgelegt ist, die Treiberschaltung (22) und den Speicher (26) zu steuern, enthält,
wobei die Beleuchtungsvorrichtung (18) konfiguriert ist, um:
die Lichtquellenmodule in Gruppen zu gruppieren, so dass jedes Lichtquellenmodul zu einer der Gruppen gehört, wobei irgendwelche zwei Lichtquellenmodule in derselben Gruppe um einen Abstand getrennt sind, derart, dass Licht, das von einem der zwei Lichtquellenmodule emittiert wird, den trichromatischen Farbsensor (28) des Anderen der zwei Lichtquellenmodule nicht beeinflusst;
einen Detektionsschritt in einer Gruppe auszuführen, wobei während des Detektionsschrittes der Steuerabschnitt (2) konfiguriert ist, um LED-Treiber-Steuerabschnitte (24) der Gruppe zu steuern, so dass alle ersten lichtemittierenden Elemente der Gruppe und alle zweiten lichtemittierenden Elemente der Gruppe gleichzeitig eingeschaltet werden und in jedem der Lichtquellenmodule (LM) der Gruppe die Lichtemissionsmengen des ersten und des zweiten lichtemittierenden Elements durch den trichromatischen Farbsensor (28) detektiert und in dem Speicher (26) gespeichert werden, woraufhin alle dritten lichtemittierenden Elemente der Gruppe gleichzeitig eingeschaltet werden und in jedem der Lichtquellenmodule (LM) der Gruppe die Lichtemissionsmenge des dritten lichtemittierenden Elements durch den trichromatischen Farbsensor (28) detektiert wird und in dem Speicher (26) gespeichert wird; und
den Detektionsschritt in jeder Gruppe zu wiederholen, wobei in jedem der Lichtquellenmodule der LED-Treiber-Steuerabschnitt (24) konfiguriert ist, um die Treiberschaltung (22) anhand der Lichtemissionsmenge des ersten, des zweiten und des dritten lichtemittierenden Elements, die in dem Speicher (26) gespeichert sind, zu steuern, und
die zweite Peak-Wellenlänge größer ist als die dritte Peak-Wellenlänge und die dritte Peak-Wellenlänge größer ist als die erste Peak-Wellenlänge.

2. Flüssigkristallanzeigevorrichtung (10) nach Anspruch 1, die ferner einen Flüssigkristalltafel-Treiber (3) enthält, um die Flüssigkristalltafel (9) anzusteuern, wobei der Flüssigkristalltafel-Treiber (3) durch den Steuerabschnitt (2) gesteuert wird, wobei
während des Detektionsschrittes der Steuerabschnitt (2) konfiguriert ist, um den Flüssigkristalltafel-Treiber zu steuern, damit die Flüssigkristalltafel (9) eine schwarze Anzeige erzeugt.

3. Flüssigkristallanzeigevorrichtung (10) nach Anspruch 1, wobei die Beleuchtungsvorrichtung (28) konfiguriert ist, um den Detektionsschritt während einer Schaltperiode von einem EIN-Zustand der Leistungsversorgung der Flüssigkristallanzeigevorrichtung (10) in einen AUS-Zustand hiervon auszuführen.

4. Flüssigkristallanzeigevorrichtung (10) nach Anspruch 1, wobei das erste, das zweite und das dritte lichtemittierende Element
eine rote LED bzw. eine blaue LED bzw. eine grüne LED sind.

5. Flüssigkristallanzeigevorrichtung (10) nach Anspruch 1, wobei:
jedes der Lichtquellenmodule einen Temperatursensor (44) enthält, um die Temperatur in dem Detektionsschritt zu detektieren, und der Speicher (26) konfiguriert ist, um die Temperatur zu speichern; und
in jedem der Lichtquellenmodule der LED-Treiber-Steuerabschnitt (24) konfiguriert ist, um die Treiberschaltung (22) ferner anhand der im Speicher (26) gespeicherten Temperatur zu steuern.

6. Flüssigkristallanzeigevorrichtung nach Anspruch 1, wobei in jedem der Lichtquellenmodule die Treiberschaltung (22) durch den LED-Treiber-Steuerabschnitt (24) gesteuert wird, um den Ansteuerungsstromwert oder die Ansteuerungsfrequenz des lichtemittierenden Elements einzustellen.

## Revendications

1. Dispositif d'affichage à cristaux liquides (10) comprenant :
un panneau à cristaux liquides (9) ;
un dispositif d'éclairage (18), et
une section de commande (2) ;
le dispositif d'éclairage (18) comprenant :
des modules de source lumineuse (LM) qui éclairent le panneau à cristaux liquides, dans lequel :
chacun des modules de source lumineuse comprend un premier, un deuxième et un troisième élément émetteur de lumière, le premier élément émetteur de lumière émettant une lumière d'une première couleur, la lumière ayant une première longueur d'onde maximale, le deuxième élément émetteur de lumière émettant une lumière d'une deuxième couleur, la lumière ayant une deuxième longueur d'onde maximale, le troisième élément émetteur de lumière émettant une lumière d'une troisième couleur, la lumière ayant une troisième longueur d'onde maximale, un circuit pilote (22) adapté pour piloter le premier, le deuxième et le troisième élément émetteur de lumière, un capteur de couleur trichromatique (28) adapté pour détecter une quantité d'émission de lumière du premier, du deuxième et du troisième élément émetteur de lumière, une mémoire (26) adaptée pour stocker la quantité d'émission de lumière du premier, du deuxième et du troisième élément émetteur de lumière, et une section de commande pilote de DEL (24) adaptée pour commander le circuit pilote (22) et la mémoire (26),
le dispositif d'éclairage (18) étant configuré :
pour grouper les modules de source lumineuse en groupes de sorte que chaque module de source lumineuse appartienne à un des groupes, deux modules de source lumineuse quelconques dans le même groupe étant séparés d'une distance suffisamment grande pour que l'émission de lumière d'un des deux modules de source lumineuse n'interfère pas avec le capteur de couleur trichromatique (28) de l'autre des deux modules de source lumineuse ;
pour effectuer une étape de détection sur un groupe, durant l'étape de détection, la section de commande (2) étant configurée pour commander des sections de commande pilote de DEL (24) du groupe de sorte que tous les premiers éléments émetteurs de lumière du groupe et tous les deuxièmes éléments émetteurs de lumière du groupe soient activés simultanément et que, dans chacun des modules de source lumineuse (LM) du groupe, la quantité d'émission de lumière du premier et du deuxième élément émetteur de lumière soit détectée par le capteur de couleur trichromatique (28) et stockée dans la mémoire (26), après que tous les troisièmes éléments d'émission de lumière du groupe ont été activés simultanément et que, dans chacun des modules de source lumineuse (LM) du groupe, la quantité d'émission de lumière du troisième élément émetteur de lumière soit détectée par le capteur de couleur trichromatique (28) et stockée dans la mémoire (26) ; et
pour répéter l'étape de détection sur chaque groupe, dans lequel, dans chacun des modules de source lumineuse, la section de commande pilote de DEL (24) est configurée pour commander le circuit pilote (22) sur la base de la quantité d'émission de lumière du premier, du deuxième et du troisième élément émetteur de lumière stockée dans la mémoire (26), et
la deuxième longueur d'onde maximale est supérieure à la troisième longueur d'onde maximale et la troisième longueur d'onde maximale est supérieure à la première longueur d'onde maximale.

2. Dispositif d'affichage à cristaux liquides (10) selon la revendication 1, comprenant en outre un pilote de panneau à cristaux liquides (3) pour piloter le panneau à cristaux liquides (9), le pilote de panneau à cristaux liquides (3) étant commandé par la section de commande (2), dans lequel
durant l'étape de détection, la section de commande (2) est configurée pour commander le pilote de panneau à cristaux liquides de sorte que le panneau à cristaux liquides (9) produise un écran noir.

3. Dispositif d'affichage à cristaux liquides (10) selon la revendication 1, dans lequel le dispositif d'éclairage (28) est configuré pour effectuer l'étape de détection durant une période de commutation d'un état activé de l'alimentation électrique du dispositif d'affichage à cristaux liquides (10) à un état désactivé de celui-ci.

4. Dispositif d'affichage à cristaux liquides (10) selon la revendication 1, dans lequel le premier, le deuxième et le troisième élément émetteur de lumière sont respectivement une DEL rouge, une DEL bleue et une DEL verte.

5. Dispositif d'affichage à cristaux liquides (10) selon la revendication 1, dans lequel :
chacun des modules de source lumineuse comprend un capteur de température (44) pour détecter la température durant l'étape de détection et la mémoire (26) est configurée pour stocker la température ; et
dans chacun des modules de source lumineuse, la section de commande de pilote de DEL (24) est configurée pour commander le circuit pilote (22) en outre sur la base de la température stockée dans la mémoire (26).

6. Dispositif d'affichage à cristaux liquides selon la revendication 1, dans lequel, dans chacun des modules de source lumineuse, le circuit pilote (22) est commandé par la section de commande de pilote de DEL (24) pour régler la valeur de courant de commande ou la fréquence de commande de l'élément émetteur de lumière.
